# EUROPÄISCHE PATENTANMELDUNG

(11) **EP 0 965 298 A1**
(43) Veröffentlichungstag der Anmeldung: **22.12.1999**
(21) Anmeldenummer: 99106779.4
(22) Anmeldetag: 06.04.1999
(51) Int. Cl.: A47J 43/07

(54) **Verschlussdeckel**

(30) Priorität: 18.06.1998 DE 19827115
(71) Anmelder: Braun GmbH, Frankfurt am Main (DE)
(72) Erfinder: Börger, Georg, 61449 Steinbach (DE); Scheiner, Peter, 97828 Marktheidenfeld (DE)

(57) **Zusammenfassung**

Die Erfindung betrifft einen Deckel (3) zum Verschließen eines Topfes, insbesondere eines motorisch betriebenen Haushaltsgerätes, wobei zur Abdichtung des Topfinnenraums zur Umgebung zwischen dem oberen Rand (17) des Topfes und dem Deckel (3) eine Dichtung (15) angeordnet ist, die beim Verschließen zusammengedrückt und in einen Freiraum (14) verformt wird, wobei in dem Deckel (3) im Bereich der Anlagefläche der Dichtung mindestens eine Nut ausgespart ist, die den Freiraum (14) mit der Umgebung verbindet.

## Beschreibung

Die Erfindung betrifft einen Deckel zum Verschließen eines Topfes, insbesondere eines motorisch betriebenen Haushaltsgerätes, wobei zur Abdichtung des Topfinnenraums zur Umgebung zwischen dem oberen Rand des Topfes und dem Deckel eine Dichtung angeordnet ist, die beim Verschließen zusammengedrückt und in einen Freiraum verformt wird.

Um das Verschließen eines Topfes mit einem derartigen Deckel zu erleichtern, sollte die Dichtung möglichst flexibel und der Freiraum möglichst groß ausgebildet sein. Dann ist es dem Benutzer möglich, durch Hinunterdrücken des Deckels auf den Topf die Dichtung in den Freiraum zu verformen. In der Praxis hat sich herausgestellt, daß im Betrieb die Dichtfunktion des Deckels und der Dichtung nicht immer einwandfrei gewährleistet ist.

Aufgabe der vorliegenden Erfindung ist es, einen Deckel zum Verschließen eines Topfes bereitzustellen, der die vorstehend genannten Nachteile überwindet. Insbesondere soll die Dichtwirkung des Deckels in Verbindung mit der Dichtung verbessert werden, die zwischen dem oberen Rand des Topfes und dem Deckel angeordnet ist.

Die Aufgabe ist bei einem Deckel zum Verschließen eines Topfes, insbesondere eines motorisch betriebenen Haushaltsgerätes, wobei zur Abdichtung des Topfinnenraums zur Umgebung zwischen dem oberen Rand des Topfes und dem Deckel eine Dichtung angeordnet ist, die beim Verschließen zusammengedrückt und in einen Freiraum verformt wird, durch die kennzeichnenden Merkmale des Anspruchs 1 gelöst. Im Rahmen der vorliegenden Erfindung ist festgestellt worden, daß die Dichtung bei bekannten Deckeln, nachdem sie durch Hinunterdrücken des Deckels auf den Topf flexibel verformt wurde, wodurch Luft aus dem Freiraum herausgepreßt wird, nicht in der Lage ist, wieder ihre ursprüngliche Form anzunehmen. Dies wird darauf zurückgeführt, daß keine Luft in den Freiraum zurückströmen kann. Durch die Ausbildung der mindestens einen Nut gemäß der vorliegenden Erfindung ist gewährleistet, daß die Dichtung aufgrund ihrer bei geschlossenem Topf vorgespannten Einbaulage ihre ursprüngliche Form wieder annehmen kann. Dies ist insbesondere dann von Vorteil, wenn der Deckel im eingebauten Zustand unbeabsichtigt stoßartig mit einer Kraft beaufschlagt wird, wodurch die Dichtung in den Freiraum hineinverformt wird. In einem solchen Fall gewährleisten die erfindungsgemäßen Nuten die Dichtfunktion des Deckels. Durch die Erfindung ist es möglich, Deckel und Dichtung so zu gestalten, daß übliche Fertigungstoleranzen an dem Topf, dem Deckel und der Dichtung nicht zu einer Beeinträchtigung der Dichtfunktion und der Benutzerfreundlichkeit führen.

Eine besondere Ausführungsart der Erfindung ist durch die Merkmale des Anspruchs 2 gekennzeichnet. Die Nasen dienen dazu, die Dichtung in dem Deckel zu halten. Durch die Nasen wird ein ungewolltes Herausfallen der Dichtung aus dem Deckel verhindert. Dennoch ist eine Herausnahme der Dichtung, beispielsweise zum Reinigen des Deckels und/oder der Dichtung, einfach zu bewerkstelligen.

Eine weitere besondere Ausführungsart der Erfindung ist durch die Merkmale des Anspruchs 3 gekennzeichnet. Die an dem Deckel ausgebildeten Schließelemente wirken beim Verschließen mit komplementären, an dem Topf ausgebildeten Schließelementen zusammen. Durch die Schließelemente wird ein definiertes, reproduzierbares Zusammendrücken der Dichtung beim Verschließen des Topfes mit dem Deckel erreicht. Die Schließelemente können beispielsweise gewindeartig ausgebildet sein.

Eine weitere besondere Ausführungsart der Erfindung (Anspruch 4) ist dadurch gekennzeichnet, daß der Freiraum in dem Deckel angeordnet ist. Das hat den Vorteil, daß in Verbindung mit dem erfindungsgemäßen Deckel einfache Flachdichtungen verwendet werden können. Diese sind einfach herzustellen und tragen dazu bei, die Kosten gering zu halten.

Eine weitere besondere Ausführungsart der Erfindung (Anspruch 5) ist dadurch gekennzeichnet, daß der Freiraum zwischen zwei parallelen ringförmigen Bereichen in dem Deckel ausgebildet ist, welche die Anlagefläche für die Dichtung bilden und dadurch, daß die Nut in dem äußeren ringförmigen Bereich ausgespart ist. Durch die Nut in dem äußeren ringförmigen Bereich wird eine Verbindung zwischen dem Freiraum und der Umgebung geschaffen. Dadurch wird zum Einen das Verformen der Dichtung beim Zusammendrücken erleichtert, weil die Luft aus dem Freiraum leichter entweichen kann. Zum Anderen ist bei einer stoßartigen Belastung des Deckels durch den Benutzer gewährleistet, daß Luft aus der Umgebung in den Freiraum zurückströmen kann, so daß die Dichtung wieder ihre ursprüngliche Form einnimmt.

Eine weitere besondere Ausführungsart der Erfindung (Anspruch 6) ist dadurch gekennzeichnet, daß der äußere ringförmige Bereich von außen nach innen abgeschrägt ist. Die Abschrägung dient dazu, die Lage der Dichtung relativ zu dem Deckel beim Verschließen und im Betrieb zu fixieren.

Die Erfindung betrifft auch eine Dichtung für den vorab beschriebenen Deckel, die nach Anspruch 7 dadurch gekennzeichnet ist, daß der Freiraum in der Dichtung ausgespart ist. Die Verwendung einer derartigen Dichtung liefert den Vorteil, daß der Freiraum nicht in dem Deckel ausgespart werden muß, wodurch sich die Herstellkosten für den Deckel reduzieren.

Eine besondere Ausführungsart der Dichtung ist dadurch gekennzeichnet (Anspruch 8), daß die Dichtung die Gestalt eines Rings aufweist, dessen Querschnitt die Form eines Rechtecks hat, dessen gegenüberliegende Längsseiten die Dichtflächen der Dichtung bilden, und dadurch, daß an den Rändern der Dichtflächen umlaufende Erhebungen ausgebildet sind. Die an den Rändern der Dichtflächen vorgesehenen Erhebungen dienen auf der einen Seite der Dichtung zur Lagefixierung der Dichtung auf dem oberen Rand des Topfes. Auf der anderen Seite der Dichtung bildet die sich zwischen den Erhebungen ergebende Vertiefung den für die Verformung der Dichtung erforderlichen Freiraum. Die symmetrische Anordnung der Erhebungen liefert den Vorteil, daß es nicht darauf ankommt, welche Seite der Dichtung an dem Topf und welche an dem Deckel anliegt. Dadurch wird der Zusammenbau erheblich vereinfacht.

Selbstverständlich ist es möglich, die Nut statt in dem Deckel in der Dichtung auszusparen. In diesem Fall ist es vorteilhaft, die Nut in einer der oder beiden umlaufenden Erhebungen der Dichtung auszusparen. Diese Lösung hätte den Vorteil, daß herkömmliche Deckel verwendet werden könnten.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele der Erfindung im Einzelnen beschrieben sind. Dabei können die in den Ansprüche und in der Beschreibung erwähnten Merkmale jeweils einzeln für sich oder in beliebiger Kombination erfindungswesentlich sein. In der Zeichnung zeigt:
- Fig. 1: einen erfindungsgemäßen Deckel in der Untersicht im Maßstab 1:1;
- Fig. 2: die vergrößerte Ansicht eines Schnitts entlang der Linie A-A in Fig. 1 mit eingesetzter Dichtung;
- Fig. 3: einen vergrößerten Ausschnitt der rechten oberen Ecke des in Fig. 2 im Schnitt dargestellten Deckels ohne Dichtung;
- Fig. 4: die vergrößerte Teilansicht eines Schnitts entlang der Linie B-B in Fig. 3;
- Fig. 5: eine der Fig. 3 ähnliche Ansicht mit eingesetzter, belasteter Dichtung;
- Fig. 6: eine vergrößerte Ansicht der Einzelheit X aus Fig. 1;
- Fig. 7: die Ansicht eines Schnitts entlang der Linie C-C in Fig. 6;
- Fig. 8: einen Querschnitt durch eine Dichtung gemäß der vorliegenden Erfindung; und
- Fig. 9: eine vergrößerte Ansicht der Einzelheit Z aus Fig. 8.

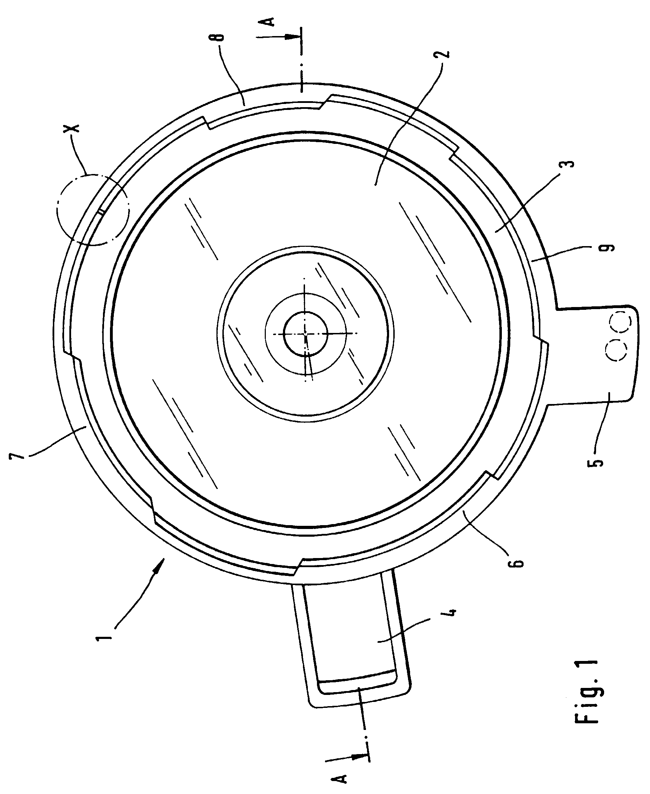

In Fig. 1 sieht man einen insgesamt mit 1 bezeichneten Deckel für eine Küchenmaschine, einen Food-Processor oder einen Mixer in der Untersicht. Bei dem Deckel handelt es sich um ein Spritzgußteil aus Kunststoff. Der Deckel 1 umfaßt eine Scheibe 2 aus einem durchsichtigen Kunststoffmaterial, die von einem Rahmen 3 aus einem nicht durchsichtigen Kunststoffmaterial eingefaßt ist. Von dem Rahmen 3 erstrecken sich radial nach außen ein Griff 4 und ein Rastelement 5. Des weiteren sind an dem Rahmen 3 Schließelemente 6, 7, 8 und 9 ausgebildet. Die Schließelemente 6 bis 9 erstrecken sich von dem Rahmen 3 radial nach innen und wirken gewindeartig mit komplementären Schließelementen zusammen, die an einem Topf ausgebildet sind.

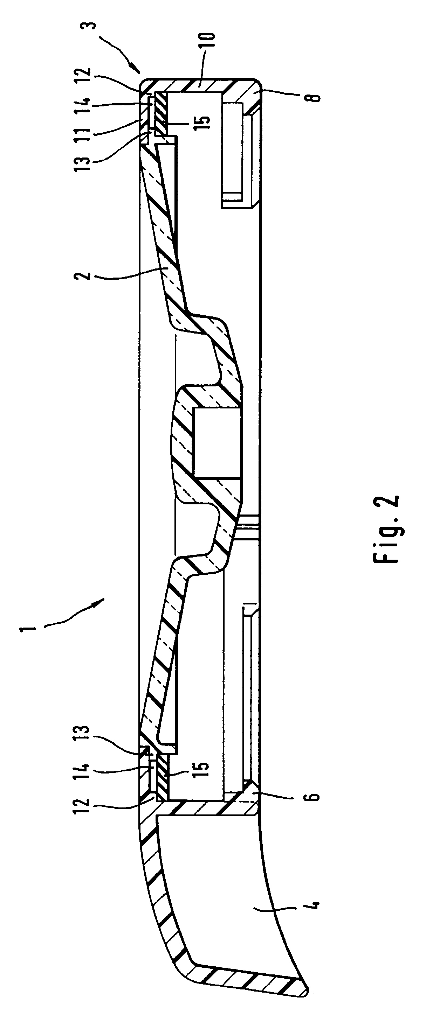

In der in Fig. 2 dargestellten Schnittansicht A-A sieht man, daß der Rahmen 3 von einem Kreiszylinder 10 gebildet ist, von dem ein um 90° nach innen gebogener Rand 11 ausgeht. An dem Rand 11 des Deckels 3 ist ein ringförmiger Bereich 12 ausgebildet. An der Scheibe 2 ist radial beabstandet zu dem ringförmigen Bereich ein ringförmiger Bereich 13 ausgebildet. Zwischen den ringförmigen Bereichen 12 und 13 ergibt sich ein Freiraum 14. An den ringförmigen Bereichen 12 und 13 liegt eine ringförmige Dichtung 15 mit einem rechteckigen Querschnitt an.

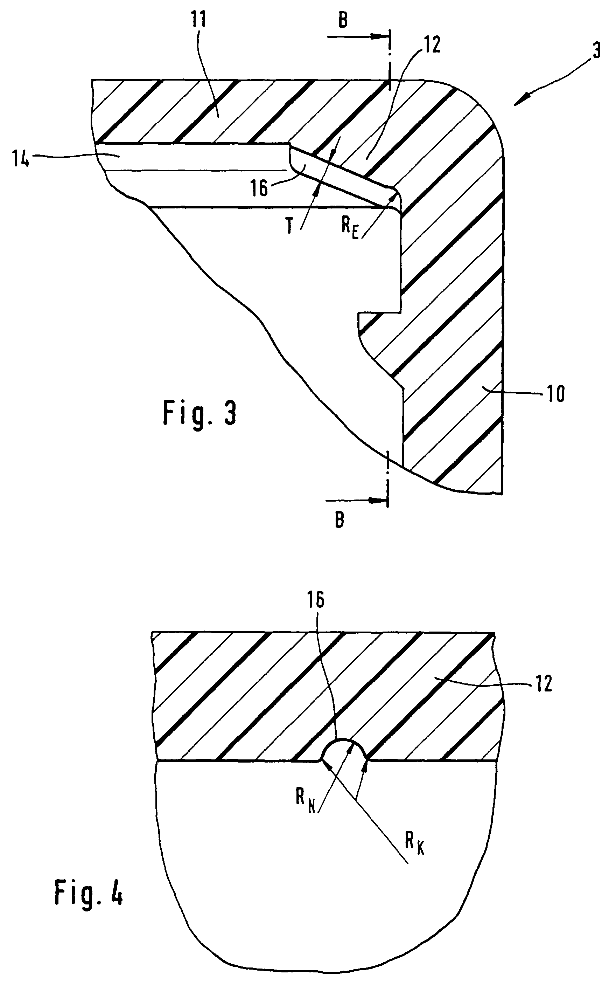

In Fig. 3 ist ein vergrößerter Ausschnitt des Deckelrahmens 3 im Schnitt dargestellt. Wie man sieht, ist der ringförmige Bereich 12 von dem Kreiszylinder 10 zu dem Rand 11 hin abgeschrägt. Darüber hinaus ist in dem ringförmigen Bereich 12 eine Nut 16 ausgespart, die sich von dem Freiraum 14 zu dem Kreiszylinder 10 hin erstreckt. Die Nut 16 hat eine Tiefe T von 0,5 mm. An dem zu dem Kreiszylinder 10 hin gewandten Ende der Nut 16 ist ein Radius R_{E} von 0,3 mm ausgebildet. Der Radius R_{E} verbessert den Austritt von Luft aus dem Freiraum 14 durch die Nut 16.

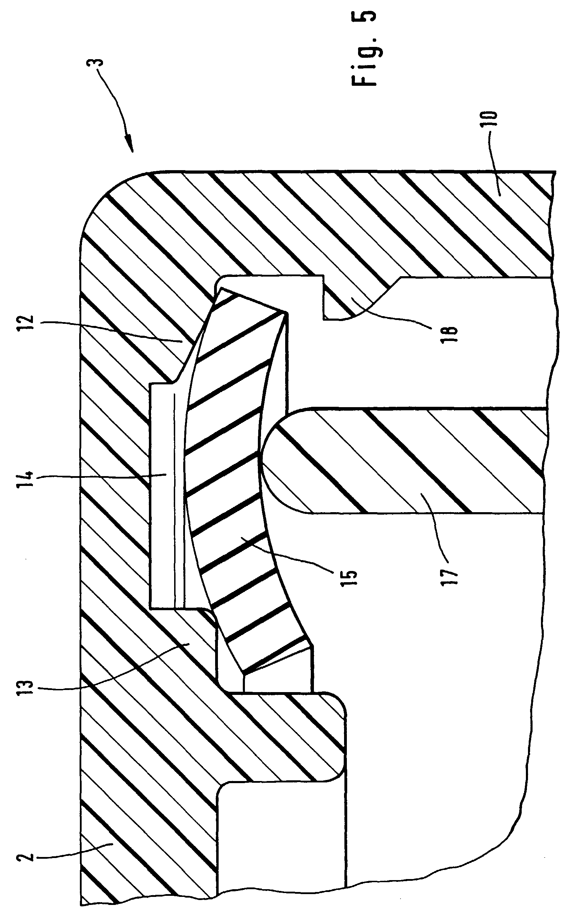

In der in Fig. 4 dargestellten Schnittansicht B-B sieht man, daß die Nut 16 einen halbkreisförmigen Querschnitt hat. Der Radius R_{N} des Nutquerschnitts beträgt 0,5 mm. An den Kanten der Nut 16 sind Radien R_{K} ausgebildet.

In Fig. 5 ist ein ähnlicher Ausschnitt des Deckels wie in Fig. 3 dargestellt, jedoch ohne Nut. Wie man in Fig. 5 sieht, befindet sich eine Dichtung 15 in Anlage gegen die ringförmigen Bereiche 12 und 13 des Deckels. Der obere Rand 17 eines Topfes drückt die Dichtung 15 in den Freiraum 14. Die Verformung der Dichtung 15 führt dazu, daß in dem Freiraum 14 vorhandene Luft verdrängt wird. Bei einer Entlastung der Dichtung 15 beispielsweise durch die Wegnahme des oberen Randes 17 des Topfes neigt die Dichtung 15 infolge ihrer Flexibilität dazu, wieder ihre ursprüngliche Gestalt einzunehmen. Die Rückstellkraft der Dichtung 15 führt in Verbindung mit der dichten Anlage der Dichtung 15 an den ringförmigen Bereichen 12 und 13 zu einer Vakuumbildung in dem Freiraum 14. Dadurch wird die Dichtung 15 daran gehindert, wieder ihre ursprüngliche Form einzunehmen. Durch die in Fig. 3 dargestellte Nut 16 kann Luft in den Freiraum 14 gelangen. Dadurch ist gewährleistet, daß sich die Dichtung 15 zurückstellen kann. Wie man in Fig. 5 des weiteren sieht, sind an dem Kreiszylinder 10 des Deckels 1 Nasen 18 ausgebildet. Die Nasen verhindern ein Herausfallen der Dichtung 15 im unbelasteten Zustand.

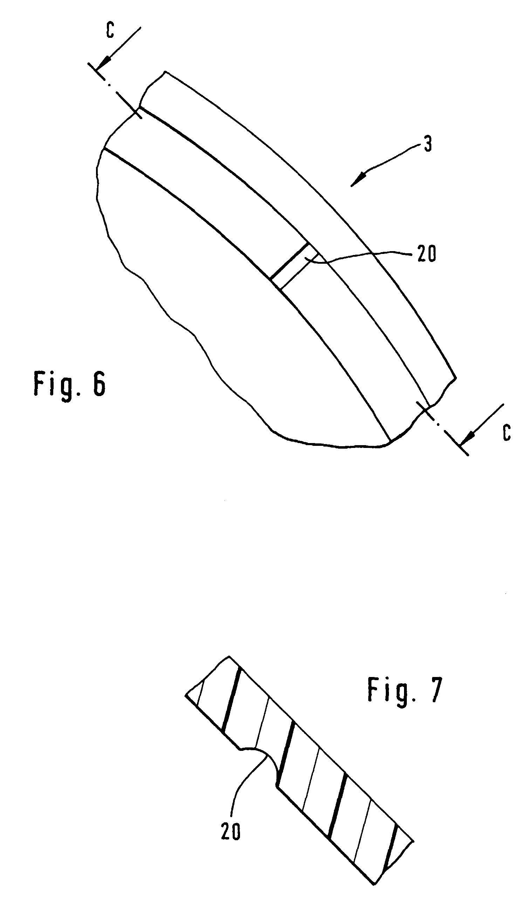

In der in Fig. 6 dargestellten Einzelheit X aus Fig. 1 sieht man eine Nut 20, die radial in dem Rahmen 3 angeordnet ist.

Die in Fig. 7 dargestellte Schnittansicht C-C zeigt, daß die Nut 20 einen halbkreisförmigen Querschnitt aufweist.

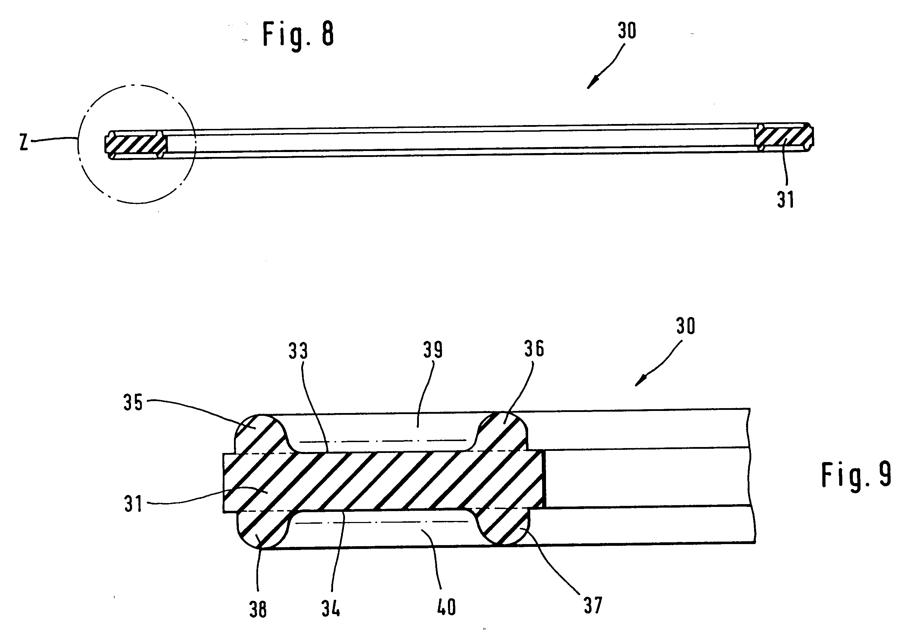

In Fig. 8 ist eine besondere Ausführungsart einer Dichtung 30 gemäß der vorliegenden Erfindung dargestellt. Die Dichtung 30 hat die Gestalt eines Rings mit einem Querschnitt in Form eines Rechtecks 31.

In Fig. 9 ist der Ausschnitt Z aus Fig. 8 vergrößert dargestellt. An den Längsseiten 33 und 34 des Rechtecks 31 sind die Dichtflächen der Dichtung 30 ausgebildet. An den gegenüberliegenden Enden der Längsseiten 33 und 34 sind jeweils umlaufende Erhebungen 35, 36; 37, 38 paarweise gegenüberliegend angeordnet. Zwischen den paarweise gegenüberliegend angeordneten Erhebungen 35, 36 und 37, 38 ist jeweils ein Freiraum 39 und 40 ausgebildet. Wenn beispielsweise auf die an der Längsseite 34 ausgebildete Dichtfläche der Dichtung 30 durch den oberen Rand eines Topfes eine Kraft aufgebracht wird, wird die an der Längsseite 33 ausgebildete Dichtfläche in den Freiraum 39 hineinverformt. Dabei wird die Luft aus dem Freiraum 39 verdrängt. Durch nicht dargestellte Nuten in der Erhebung 35 oder, wie vorab geschildert, in dem Deckel 1 kann beim Entlasten der Dichtung 30 wieder Luft in den Freiraum 39 gelangen.

## Patentansprüche

1. Deckel zum Verschließen eines Topfes, insbesondere eines motorisch betriebenen Haushaltsgerätes, wobei zur Abdichtung des Topfinnenraums zur Umgebung zwischen dem oberen Rand (17) des Topfes und dem Deckel (1) eine Dichtung (15) angeordnet ist, die beim Verschließen zusammengedrückt und in einen Freiraum (14) verformt wird,
**dadurch gekennzeichnet**,
daß in dem Deckel (1) im Bereich der Anlagefläche der Dichtung (15) mindestens eine Nut (16) ausgespart ist, die den Freiraum (14) mit der Umgebung verbindet.

2. Deckel nach Anspruch 1,
**dadurch gekennzeichnet**,
daß an dem Deckel (1) mehrere Nasen (18) ausgebildet sind, die dazu dienen, die Dichtung (15) in dem Deckel (1) zu halten.

3. Deckel nach einem der vorhergehenden Ansprüche,
**dadurch gekennzeichnet**,
daß an dem Deckel (1) Schließelemente (6, 7, 8, 9) ausgebildet sind, die beim Verschließen mit komplementären an dem Topf ausgebildeten Schließelementen zusammenwirken.

4. Deckel nach einem der vorhergehenden Ansprüche,
**dadurch gekennzeichnet**,
daß der Freiraum (14) in dem Deckel (1) angeordnet ist.

5. Deckel nach Anspruch 4,
**dadurch gekennzeichnet**,
daß der Freiraum (14) zwischen zwei parallelen ringförmigen Bereichen (12, 13) in dem Deckel (1) ausgebildet ist, welche die Anlagefläche für die Dichtung (15) bilden, und daß die Nut (16) in dem äußeren ringförmigen Bereich (12) ausgespart ist.

6. Deckel nach Anspruch 5,
**dadurch gekennzeichnet**,
daß der äußere ringförmige Bereich (12) in dem Deckel (1) von außen nach innen abgeschrägt ist.

7. Dichtung für einen Deckel nach einem der Ansprüche 1 bis 3,
**dadurch gekennzeichnet**,
daß der Freiraum (39, 40) in der Dichtung (30) ausgespart ist.

8. Dichtung nach Anspruch 7,
**dadurch gekennzeichnet**,
daß die Dichtung (30) die Gestalt eines Rings aufweist, dessen Querschnitt die Form eines Rechtecks (31) hat, dessen gegenüberliegende Längsseiten (33, 34) die Dichtflächen der Dichtung (30) bilden und daß an den Rändern der Dichtfläche umlaufende Erhebungen (35, 36; 37, 38) ausgebildet sind.
